# FASCICULE DE BREVET EUROPEEN

(11) **EP 0 657 343 B1**
(45) Date de publication et mention de la délivrance du brevet: **02.01.1997**
(21) Numéro de dépôt: 94402344.9
(22) Date de dépôt: 18.10.1994
(51) Int. Cl.: B62D 55/30

(54) **Dispositif de tension de chenille**
Gleiskettenspannvorrichtung
Track tensioning mechanism

(30) Priorité: 08.12.1993 FR 9314704
(43) Date de publication de la demande: 14.06.1995
(73) Titulaire: GIAT INDUSTRIES, F-78000 Versailles (FR)
(72) Inventeur: Bouit, René, F-42153 Riorges (FR); Tillier, Jacques, F-42840 Montagny (FR); Lorrain, André, F-42300 Mably (FR)

(56) Documents cités:
- EP-A- 0 332 869

## Description

L'invention concerne un dispositif de tension de chenille dans un véhicule automobile, tel en particulier qu'un véhicule blindé à usage militaire ou un engin de travaux publics, ce dispositif étant également applicable à la tension de chaînes, de courroies, de bandes sans fin ou analogues.

Dans un véhicule chenillé, chaque chenille est guidée sur des galets d'appui au sol, sur un barbotin d'entraînement situé à une extrémité du véhicule et sur une poulie de renvoi située à l'autre extrémité du véhicule, cette poulie servant également à tendre la chenille et étant pour cela associée à des moyens de déplacement dans deux directions opposées correspondant respectivement à une augmentation et à une diminution de la tension de la chenille.

En général, la poulie de renvoi et de tension est portée par un arbre manivelle sur lequel agit un actionneur du type mécanique ou hydraulique, tel par exemple qu'un système mécanique à vis et engrenages qui agit sur la position angulaire de l'arbre manivelle ou un vérin hydraulique à piston à mouvement rectiligne, articulé par des rotules sur la caisse du véhicule et sur un bras de l'arbre manivelle. Cette dernière variante est illustrée par le document EP-A- 0 332 869, qui divulgue en combinaison les caractéristiques du préambule de la revendication 1 ci-après.

Les inconvénients de ces systèmes connus sont multiples. Les systèmes hydrauliques sont montés à l'extérieur de la caisse du véhicule et sont donc vulnérables et sensibles à l'environnement extérieur. De plus, les efforts transmis aux paliers de l'arbre manivelle sont très élevés. Quant aux systèmes mécaniques, ils peuvent être montés à l'intérieur de la caisse, mais ils sont complexes et le réglage de tension de chenille est très long, doit être fait à l'arrêt du véhicule sur sol plat par des opérateurs se trouvant hors du véhicule et est relativement peu précis. En outre, ces systèmes mécaniques sont rigides et susceptibles de rupture immédiate ou différée en cas d'efforts importants (notamment en cas de bourrage de terre entre la chenille et ses galets) et les risques de déchenillage sont élevés.

La présente invention a notamment pour but d'éviter ces inconvénients.

Elle a pour objet un dispositif de tension de chenille qui permette d'éviter les risques de rupture et de déchenillage tout en assurant un réglage facile, précis et rapide de la tension d'une chenille à partir du poste de pilotage du véhicule.

Elle a également pour objet un dispositif de ce type qui puisse être monté à l'intérieur de la caisse du véhicule.

Elle a encore pour objet un dispositif de ce type qui permette d'éliminer rapidement et sans difficulté un bourrage de terre entre la chenille et ses galets.

Elle propose donc un dispositif de tension de chenille pour véhicule automobile, tel en particulier qu'un véhicule blindé ou un engin de travaux publics, ce dispositif comprenant une poulie de guidage de la chenille, un arbre manivelle de support de la poulie, des moyens à vérin hydraulique d'entraînement de cet arbre en rotation, et des moyens d'alimentation et de commande du vérin, caractérisé en ce que le vérin hydraulique est un vérin rotatif comprenant deux éléments formant cylindre et piston respectivement, dont l'un est fixé sur la caisse du véhicule et dont l'autre est mobile en rotation autour de l'axe de rotation de l'arbre support de la poulie et est solidaire en rotation de cet arbre, ce dernier étant lui-même supporté et guidé en rotation par l'élément fixe du vérin rotatif.

Un tel dispositif présente des avantages importants :
- les efforts transmis aux paliers de l'arbre manivelle sont beaucoup moins élevés que dans le cas d'un vérin à piston à mouvement rectiligne agissant sur un bras excentré de l'arbre manivelle, ce qui réduit les risques de rupture immédiate ou différée,
- le vérin peut être monté à l'intérieur de la caisse du véhicule,
- son encombrement est faible,
- la tension de la chenille est réglable de façon simple, rapide et précise par variation de la pression d'alimentation du vérin, cette modification étant commandée depuis le poste de pilotage du véhicule.

Il en résulte que les risques de déchenillage sont beaucoup plus faibles que dans la technique antérieure et sont rendus quasi-inexistants dans la très grande majorité des cas d'utilisation du véhicule, ce qui améliore considérablement la sécurité et la disponibilité du véhicule et réduit son coût de possession.

Dans un mode de réalisation préféré de l'invention, le cylindre et le piston du vérin rotatif sont de forme torique, et le cylindre du vérin est solidaire de l'arbre support de la poulie tandis que le piston du vérin est fixe et est formé d'une pièce avec un carter de fixation sur la caisse du véhicule.

Dans cette réalisation, le cylindre du vérin comporte une première partie torique creuse de réception du piston et une seconde partie cylindrique tubulaire traversée par l'arbre support de la poulie, la surface cylindrique interne de cette seconde partie comportant des cannelures longitudinales qui coopèrent avec des cannelures longitudinales formées sur la surface cylindrique externe de l'arbre support de la poulie.

Le carter du vérin comprend deux manchons axialement alignés, disposés de part et d'autre du piston et dans lesquels sont montés des paliers de support et de guidage de l'arbre support de la poulie.

Les moyens d'alimentation et de commande du vérin comprennent une pompe hydraulique dont la sortie est reliée au vérin par l'intermédiaire d'un circuit hydraulique comprenant un distributeur et un limiteur de pression, une entrée de ce circuit hydraulique étant reliée à la sortie d'un circuit logique dont les entrées sont reliées à un capteur de pression sensible à la pression interne du vérin, à un capteur de position sensible à la position angulaire de l'élément mobile du vérin et à des moyens de commande actionnables par le conducteur du véhicule.

Ces moyens permettent de régler la tension des chenilles d'un véhicule depuis le poste de pilotage du véhicule et quelle que soit la position du véhicule sur le sol.

L'invention sera mieux comprise et d'autres caractéristiques, détails et avantages de celle-ci apparaitront plus clairement à la lecture de la description qui suit, faite à titre d'exemple en référence aux dessins annexés dans lesquels :
la figure 1 est une vue schématique en coupe transversale selon la ligne I-I de la figure 2, d'un vérin rotatif utilisé dans le dispositif selon l'invention;
la figure 2 est une vue schématique en coupe longitudinale du vérin selon la ligne II-II de la figure 1;
la figure 3 est une vue schématique en perspective éclatée du dispositif selon l'invention;
la figure 4 représente schématiquement les moyens d'alimentation et de commande du dispositif selon l'invention.

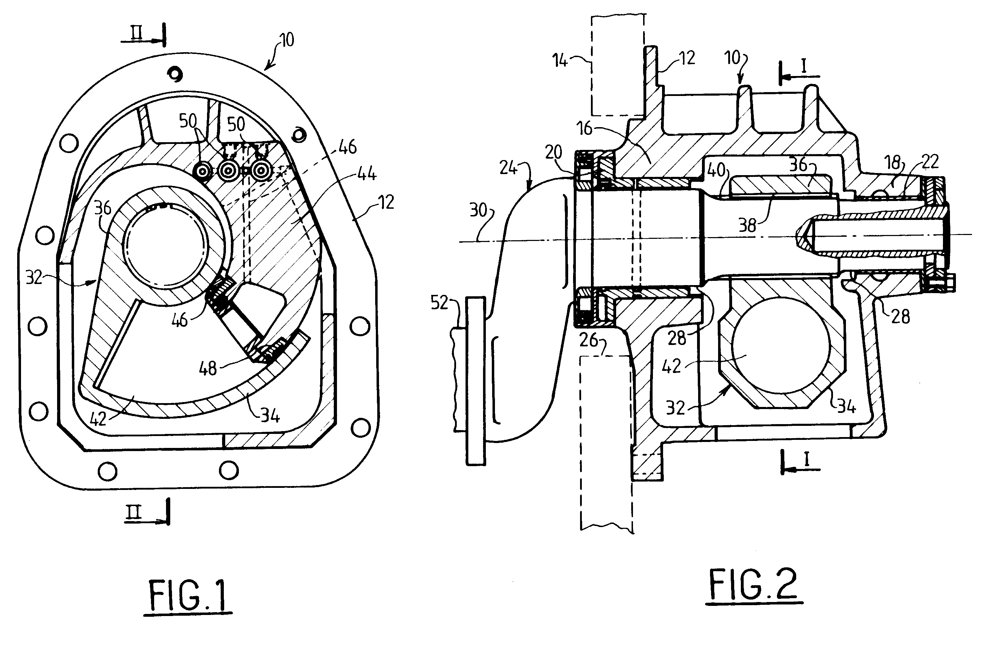

On se réfère d'abord aux figures 1 et 2, où l'on a représenté en détail le vérin d'entraînement en rotation d'un arbre manivelle sur lequel est montée une poulie de tension d'une chenille, notamment dans le cas d'un véhicule blindé à usage militaire.

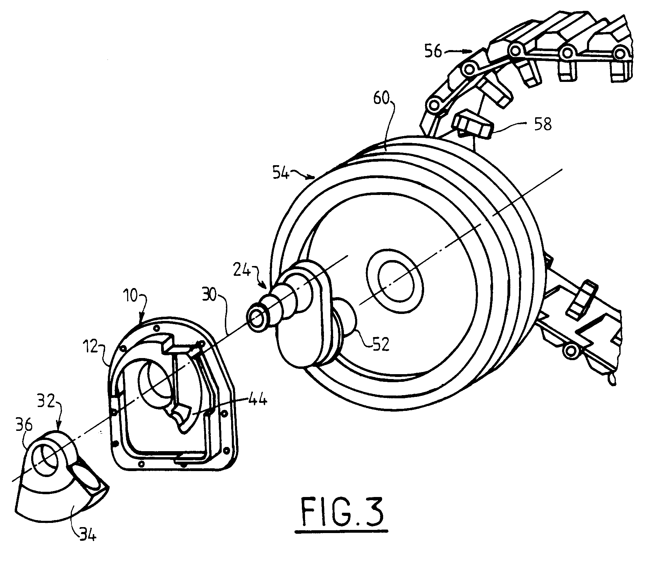

Ce vérin comprend essentiellement un carter 10 dont une face d'extrémité comporte une bride 12 de fixation sur la face interne d'un élément 14 de la caisse du véhicule, le carter comprenant deux manchons d'extrémité 16, 18 qui sont axialement alignés et munis de paliers 20, 22 de support et de guidage en rotation d'un arbre manivelle 24 passant à travers un orifice 26 de l'élément 14 de la caisse du véhicule, cet arbre 24 portant une poulie de tension de chenille, comme cela sera décrit plus en détail en référence à la figure 3.

La partie de l'arbre 24 qui est montée dans le carter 10 du vérin comprend deux portées cylindriques ou tourillons 28 montés dans les paliers 20, 22 et au moyen desquels l'arbre 24 est guidé en rotation autour de l'axe longitudinal 30 des manchons 16, 18.

La partie de l'arbre 24 comprise entre les tourillons 28 porte une pièce 32 dont une partie 34 constitue le cylindre du vérin rotatif et dont une autre partie 36 comporte un passage cylindrique de montage sur l'arbre 24, ce passage cylindrique étant formé avec des cannelures longitudinales 38 qui sont engagées dans des cannelures longitudinales 40 de la partie de l'arbre 24 comprise entre les tourillons 28.

La partie 34 de la pièce 32 est formée avec un passage torique 42 ouvert à une extrémité et fermé à l'autre, qui s'étend angulairement sur 90° environ et qui reçoit un piston 44 formé d'une seule pièce avec le carter 10.

Ce piston 44 est également de forme torique et est muni à son extrémité libre de joints d'étanchéité et/ou de segments 46, 48 coopérant avec la surface interne du passage torique 42 de la pièce 32.

La pièce 32 et le piston 44 formés par le carter 10 constituent ainsi un vérin rotatif dont le piston est fixe et dont le cylindre est mobile en rotation autour de l'axe 30 et est solidaire en rotation de l'arbre 24.

Ce vérin rotatif est du type à simple effet et est alimenté en liquide sous pression par un conduit 46 formé à travers le piston 44 et débouchant à l'intérieur du passage torique 42. Dans le piston 44 sont également formés des logements 50 qui communiquent avec le conduit d'alimentation 46 et qui sont destinés à recevoir des composants hydrauliques comprenant un distributeur et un limiteur de pression, ainsi qu'un capteur de pression ou un raccord de connexion à un capteur de pression. Eventuellement, les logements 50 pourraient recevoir, non les composants hydrauliques, mais des raccords de liaison à ces composants.

Comme on le voit bien en figure 3, l'arbre 24 associé à ce vérin rotatif comprend un maneton excentré 52 sur lequel est montée rotative une poulie 54 de guidage et de tension d'une chenille 56. Cette chenille comprend sur sa surface interne des dents de guidage 58 qui s'engagent dans une gorge médiane 60 de la poulie 54 pour assurer un maintien latéral ou transversal de la chenille sur la poulie.

Si l'on se réfère au dessin de la figure 3, une rotation de l'arbre 24 autour de l'axe 30 dans le sens des aiguilles d'une montre va se traduire par une augmentation de la tension de la chenille 56, tandis qu'une rotation de cet arbre dans le sens inverse va entraîner une diminution de cette tension.

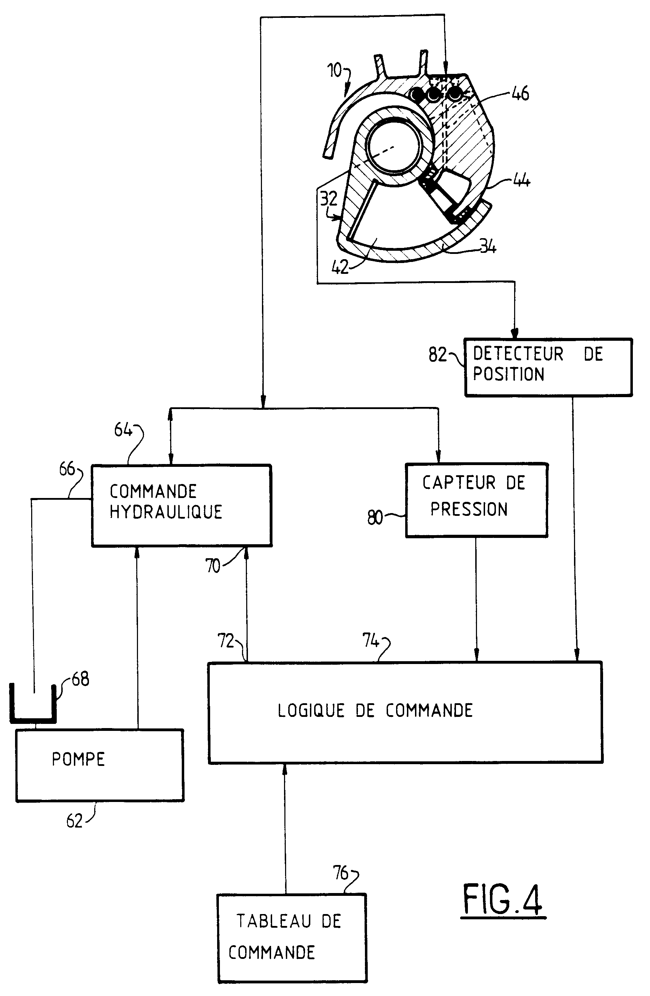

La rotation de l'arbre 24 dans un sens ou dans l'autre est commandée par le système représenté en figure 4 où l'on retrouve le vérin rotatif constitué du piston fixe 44 engagé dans le passage torique 42 de la pièce 32 solidaire en rotation de l'arbre 24.

Le vérin est alimenté en liquide sous pression par une pompe 62, par l'intermédiaire d'un circuit 64 de commande hydraulique comportant un limiteur de pression et une valve à deux orifices et deux positions, cette valve pouvant relier la sortie de la pompe 62 au conduit 46 d'alimentation du vérin, ou relier ce conduit d'alimentation 46 à un conduit 66 de sortie menant à un réservoir 68, pour mettre le vérin à l'échappement. Un entrée 70 du circuit 64 est reliée à une sortie 72 d'un circuit logique 74 dont les entrées sont reliées aux sorties d'un tableau de commande 76 utilisable par le conducteur du véhicule, ainsi qu'aux sorties d'un capteur de pression 80 sensible à la pression dans le vérin rotatif et d'un détecteur de position 82 sensible à la position angulaire de la pièce 32 ou de l'arbre 24.

Le limiteur de pression prévu dans le circuit de commande 64 permet de limiter la pression dans le vérin rotatif et donc la tension de la chenille à une valeur ne risquant pas d'entraîner une rupture immédiate ou différée du dispositif de tension.

Le système d'alimentation et de commande de la figure 4 est utilisé de la façon suivante :
le réglage initial de la tension d'une chenille est effectué sur sol plat, à l'arrêt du véhicule par le conducteur du véhicule qui commande l'alimentation du vérin rotatif en liquide sous pression par la pompe 62 jusqu'à ce qu'une pression de référence soit atteinte dans le vérin. Le détecteur de position 82 fournit alors un signal de référence de position angulaire de la pièce 32 ou de l'arbre 24. La mise en tension de la chenille peut ensuite être effectuée dans toutes les positions du véhicule (en pente, en dévers, dans une fouille).

Durant les phases de déplacement du véhicule, sur route ou en tout terrain, le vérin rotatif est isolé de l'extérieur, sa pression interne restant inférieure ou égale à la valeur maximale imposée par le limiteur de pression prévu dans le circuit 64. Les anomalies éventuelles peuvent être signalées par le détecteur de position 82, signalant que le dispositif de tension s'est écarté de sa position initiale.

Lorsque le véhicule est utilisé pour des travaux de terrassement, il peut arriver que la tension de la chenille augmente par accumulation de terre entre la chenille et ses galets. La pression dans le vérin rotatif reste limitée à la valeur maximale fixée par le limiteur de pression faisant partie du circuit 64. Lorsque cela est nécessaire, le vérin rotatif est alimenté par la pompe 62 qui fournit un débit de liquide juste suffisant pour permettre le suivi, à pression sensiblement constante, des mouvements de la poulie de tension 54.

Si nécessaire, le conducteur du véhicule peut, au moyen du tableau de commande 76, mettre le vérin rotatif à l'échappement pour obtenir une détente maximale de la chenille, par exemple pour l'élimination de la terre accumulée entre la chenille et ses galets ou pour permettre une intervention sur le dispositif de tension ou sur le réducteur du barbotin.

De façon générale, le dispositif selon l'invention présente l'avantage d'être particulièrement compact, d'utiliser un vérin constitué d'un très faible nombre de pièces, et de permettre tous les réglages nécessaires de tension d'une chenille depuis le poste de pilotage du véhicule, sans reporter d'efforts trop élevés sur les paliers de l'arbre portant la poulie de tension.

Bien entendu, diverses variantes du dispositif décrit peuvent être utilisées par l'homme du métier. Par exemple, le vérin rotatif peut être à double effet : il suffit pour cela de donner une forme symétrique au piston 44 et de prévoir un logement torique 42 à chaque extrémité du piston. Ce vérin rotatif peut aussi être à double corps, pour produire un couple de rotation pur : il suffit pour cela que le cylindre et le piston soient symétriques par rapport à l'axe de rotation.

## Revendications

1. Dispositif de tension de chenille pour véhicule automobile, tel en particulier qu'un véhicule blindé ou un engin de travaux publics, ce dispositif comprenant une poulie (54) de guidage de la chenille (56), un arbre manivelle (24) de support de la poulie, des moyens à vérin hydraulique d'entraînement de cet arbre en rotation, et des moyens d'alimentation et de commande du vérin, caractérisé en ce que le vérin hydraulique est un vérin rotatif comprenant deux éléments (32, 44) formant cylindre et piston respectivement, dont l'un est fixé sur la caisse du véhicule et dont l'autre est mobile en rotation autour de l'axe (30) de rotation de l'arbre (24) de support de la poulie et est solidaire en rotation de cet arbre, ce dernier étant lui-même supporté et guidé en rotation par l'élément fixe (10, 44) du vérin rotatif.

2. Dispositif selon la revendication 1, caractérisé en ce que le cylindre (34) et le piston (44) du vérin rotatif sont de forme torique.

3. Dispositif selon la revendication 1 ou 2, caractérisé en ce que le cylindre (34) du vérin est solidaire de l'arbre (24) de support de la poulie tandis que le piston (44) du vérin est fixe et est formé d'une pièce avec un carter (10) de fixation sur la caisse (14) du véhicule.

4. Dispositif selon la revendication 3, caractérisé en ce que l'élément mobile (32) du vérin comporte une première partie torique creuse (34) de réception du piston (44) et une seconde partie (36) cylindrique tubulaire traversée par l'arbre (24) de support de la poulie.

5. Dispositif selon la revendication 4, caractérisé en ce que la surface cylindrique interne de la seconde partie (36) de l'élément mobile du vérin comporte des cannelures longitudinales (38) engagées dans des cannelures longitudinales (40) formées sur la surface cylindrique extérieure de l'arbre (24) supportant la poulie.

6. Dispositif selon l'une des revendications 3 à 5, caractérisé en ce que le carter (10) du vérin rotatif comprend deux manchons (16, 18) axialement alignés, disposés de part et d'autre du piston (44) et dans lesquels sont montés des paliers (20, 22) de support et de guidage de l'arbre (24) portant la poulie.

7. Dispositif selon l'une des revendications 3 à 6, caractérisé en ce que le carter (10) du vérin est fixé sur la caisse à l'intérieur de celle-ci, au niveau d'un orifice (26) de passage de l'arbre (24) portant la poulie.

8. Dispositif selon l'une des revendications 3 à 7, caractérisé en ce que le piston (44) du vérin est traversé longitudinalement par un conduit (46) d'alimentation en liquide sous pression.

9. Dispositif selon la revendication 8, caractérisé en ce que le piston (44) du vérin comporte des logements (50) reliés au conduit d'alimentation (46) et recevant des composants hydrauliques comprenant un limiteur de pression, un distributeur et un capteur de pression ou des raccords connectés à ces composants.

10. Dispositif selon l'une des revendications précédentes, caractérisé en ce que les moyens d'alimentation et de commande du vérin comprennent une pompe hydraulique (62) dont la sortie est reliée au vérin par l'intermédiaire d'un circuit hydraulique (64) comprenant un distributeur et un limiteur de pression, une entrée (70) du circuit (64) étant reliée à une sortie (72) d'un circuit logique (74) dont les entrées sont reliées à un capteur de pression (80) sensible à la pression interne du vérin, à un capteur de position (82) sensible à la position angulaire de l'élément mobile du vérin ou de l'arbre (24) de support de la poulie et à des moyens de commande (76) actionnables par le conducteur du véhicule.

## Claims

1. A track tensioning device for an automotive vehicle, such as in particular an armoured vehicle or plant for engineering works, this device comprising a guiding pulley (54) for the track (56), a crankshaft (24) to support the pulley, means using a hydraulic jack to drive this shaft in rotation, and supply and control means for the jack, characterised in that the hydraulic jack is a revolving jack comprising two element (32, 44) respectively forming a cylinder and piston, one of which is attached to the vehicle body and the other is able to rotate around the rotational axis (30) of the shaft (24) supporting the pulley and is integral in rotation with this shaft, the latter being itself supported and guided in rotation par the fixed element (10, 44) of the revolving jack.

2. A device according to Claim 1, characterised in that the cylinder (34) and the piston (44) of the revolving jack are of a toric shape.

3. A device according to Claim 1 or 2, characterised in that the cylinder (34) of the jack is integral with the shaft (24) supporting the pulley whereas the piston (44) of the jack is fixed and is formed in a single piece with an attachment casing (10) on the body (14) of the vehicle.

4. A device according to Claim 3, characterised in that the mobile element (32) of the jack comprises a first hollow toric part (34) to accommodate the piston (44) and a tubular cylindrical second part (36) through which the shaft (24) supporting the pulley passes.

5. A device according to Claim 4, characterised in that the inner cylindrical surface of the second part (36) of the mobile element of the jack comprises longitudinal ribs (38) engaged in longitudinal ribs (40) formed on the outer cylindrical surface of the shaft (24) supporting the pulley.

6. A device according to one of Claims 3 to 5, characterised in that the casing (10) of the revolving jack comprises two axially aligned sleeves (16, 18), arranged on either side of the piston (44) and in which bearings (20, 22) are mounted to support and guide the shaft (24) carrying the pulley.

7. A device according to one of Claims 3 to 6, characterised in that the casing (10) of the jack is attached on the body on the inside of the latter, at an opening (26) through which the shaft (24) carrying the pulley passes.

8. A device according to one of Claims 3 to 7, characterised in that a supply channel (46) in liquid under pressure passes longitudinally through the piston (44) of the jack.

9. A device according to Claim 8, characterised in that the piston (44) of the jack comprises housings (50) connected to the supply channel (46) and accommodating the hydraulic components which are constituted by a pressure relief valve, a distributor and a pressure sensor, or by the connector elements joined to these components.

10. A device according to one of the above Claims, characterised in that the supply and control means of the jack comprise a hydraulic pump (62) whose outlet is connected to the jack by means of a hydraulic circuit (64) incorporating a distributor and a pressure relief valve, one inlet (70) of the circuit (64) being connected to an outlet (72) of a logic circuit (74) whose inlets are connected to a pressure sensor (80) sensitive to the internal pressure of the jack, to a position sensor (82) sensitive to the angular position of the mobile element of the jack or of the shaft (24) supporting the pulley and to control means (76) which can be activated by the vehicle's driver.

## Patentansprüche

1. Raupenspannvorrichtung für Automobilfahrzeuge wie vor allem für ein Panzerfahrzeug oder eine Maschine für öffentliche Bauarbeiten, wobei die Vorrichtung eine Scheibe (54) zum Führen der Raupe (56), eine Kurbelwelle (24) zum Tragen der Scheibe, Mittel mit hydraulischem Antriebsstellglied für diese Welle in Drehung und Mittel zur Versorgung und Steuerung des Stellglieds aufweist, gekennzeichnet dadurch, daß das hydraulische Stellglied ein Drehstellglied mit zwei Elementen (32, 44) ist, die den Zylinder und den Kolben bilden, von denen einer stationär auf dem Fahrzeugaufbau befestigt ist und der andere um die Achse (30) der Welle (24) drehen kann, die die Scheibe trägt und in Drehung fest mit dieser Welle verbunden ist, wobei letztere selbst in Drehung vom stationären Element (10, 44) des Drehstellglieds getragen und geführt wird.

2. Vorrichtung gemäß dem Anspruch 1, gekennzeichnet dadurch, daß der Zylinder (34) und der Kolben (44) des Drehstellglieds torische Form haben.

3. Vorrichtung gemäß dem Anspruch 1 oder 2, gekennzeichnet dadurch, daß der Zylinder (34) des Stellglieds fest mit der Welle (24) verbunden ist, die die Scheibe trägt, während der Kolben (44) des Stellglieds stationär ist und aus einem einzigen Stück mit dem Gehäuse (10) zur Befestigung auf dem Fahrzeug (14) gebildet wird.

4. Vorrichtung gemäß dem Anspruch 3, gekennzeichnet dadurch, daß das bewegliche Element (32) des Stellglieds einen ersten torischen Hohlteil (34) zur Aufnahme des Kolbens (44) aufweist und einen zweiten zylindrischen röhrenförmigen Teil (36), den die Welle (24) durchquert, die die Scheibe trägt.

5. Vorrichtung gemäß dem Anspruch 4, gekennzeichnet dadurch, daß die zylindrische Innenoberfläche des zweiten Teils (36) des beweglichen Elements des Stellglieds Längsrillen (38) aufweist, die in die Längsrillen (40) eingreifen, die auf der zylindrischen Außenoberfläche der Welle (24), die die Scheibe trägt, gebildet sind.

6. Vorrichtung gemäß einem der Ansprüche 3 bis 5, gekennzeichnet dadurch, daß das Gehäuse (10) des Drehstellglieds zwei axial gefluchtete Stutzen (16, 18) aufweist, die zu beiden Seiten des Kolben (44) angebracht sind und in welchen die Lager (20, 22) zum Tragen und Führen der Welle (24), die die Scheibe trägt, montiert sind.

7. Vorrichtung gemäß einem der Ansprüche 3 bis 6, gekennzeichnet dadurch, daß das Gehäuse (10) des Zylinders im Inneren des Fahrzeugaufbaus befestigt ist, und zwar auf der Ebene einer Öffnung (26) zur Passage der Welle (24), die die Scheibe trägt.

8. Vorrichtung gemäß einem der Ansprüche 3 bis 7, gekennzeichnet dadurch, daß der Kolben (44) des Zylinders längs von einer Leitung (46) durchquert wird, die eine druckbeaufschlagte Flüssigkeit zuleitet.

9. Vorrichtung gemäß dem Anspruch 8, gekennzeichnet dadurch, daß der Kolben (44) des Zylinders Aussparungen (50) aufweist, die mit der Versorgungsleitung (46) verbunden sind und die hydraulischen Bauteile aufnehmen, zu denen ein Druckbegrenzer, ein Verteiler und ein Druckgeber oder Anschlüsse für solche Bauteile gehören.

10. Vorrichtung gemäß einem der vorhergehenden Ansprüche, gekennzeichnet dadurch, daß die Versorgungs- und Steuermittel des Stellglieds eine Hydropumpe (62) aufweisen, deren Ausgang mit dem Stellglied über eine Hydraulikschaltung (64) verbunden ist, die einen Verteiler und einen Druckbegrenzer enthält, wobei der Eingang (70) der Schaltung (64) mit einem Ausgang (72) auf einer Logikschaltung (74) verbunden ist, deren Eingänge mit einem Druckgeber (80) verbunden sind, der auf den Innendruck des Stellglieds reagiert, und einen Positionsgeber (82), der auf die linke Position des beweglichen Elements des Stellglieds oder der Welle (24) reagiert, die die Scheibe trägt, und Steuermittel (76), die vom Fahrzeugfahrer betätigt werden können.
